# EUROPEAN PATENT APPLICATION

(11) **EP 4 730 645 A1**
(43) Date of publication of application: **22.04.2026**
(21) Application number: 24383238.3
(22) Date of filing: 13.11.2024
(51) Int. Cl.: H02S 50/00

(54) **DEVICE AND PILE DRIVING CONTROL SYSTEM FOR PHOTOVOLTAIC PLANTS**

(71) Applicant: Amelia Lab, S.L., 08980 Sant Feliu de Llobregat Barcelona (ES)
(72) Inventor: Santos Clavero, Daniel, 08170 Montornès del Vallès (ES); Roure Garcia, Ferran, 17006 Girona (ES)
(74) Representative: Clarke, Modet y Cía., S.L.

(57) **Abstract**

Device and system for controlling pile driving in photovoltaic plants. The pile driving control device (3) comprises:
a fastening system for to a pile (1) of a photovoltaic plant (2);
a geolocation system (6) configured to measure the position (*P*) of the pile (1);
a distance sensor (7) configured to measure the height (*h*) of the pile (1) relative to the ground (14);
a tilt sensor (8) configured to measure the vertical inclination of the pile (1);
an orientation measuring unit (9) configured to measure the orientation (*Ψ*) of the pile (1);
a wireless communications module (10);
a battery (11); and
a control unit (12) configured for wireless reception and transmission of the measurements (15) from the sensors to a remote server (21).

The pile driving control system (20) incorporates a remote server (21) that receives the measurements and verifies the proper installation of the piles (1).

## Description

### Field of the invention

This invention falls within the field of monitoring systems for the proper installation of piles in photovoltaic plants or systems for the periodic quality control of pile driving once the photovoltaic park is operational.

### Background of the invention

There is currently a high demand for photovoltaic parks to meet renewable energy requirements. These parks span areas as large as 2,000 hectares.

In the construction project of a photovoltaic park, there are different phases:
- Topography phase, where the topography of the area where the photovoltaic plant will be implemented is carried out. This phase is crucial as it provides data that influences the rest of the project. It involves measurements related to earthworks and the positioning of pile foundations. Data collection, particularly in larger parks, is currently conducted using drones, either through aerial scanning or photogrammetric techniques.
- Construction phase, in which the physical components that make up the photovoltaic park are implemented, including the installation of piles supporting the photovoltaic panels.
- Maintenance phase, including cleaning the photovoltaic panels and detecting faults in the internal cells of the photovoltaic panels.

Given the complexity of the project and the number of people involved in the construction phase, many of the piles may be installed incorrectly with respect to what was initially planned. A pile is a beam approximately three meters long with various profiles (e.g., I-beam, H-beam). The pile are vertically embedded, approximately 40% of their length, using a hammer-type machine that sinks the beam into the ground.

Once the piles are driven, their alignment and levelling is checked to ensure that they are correctly positioned, making any necessary adjustments to ensure stability. However, these reviews are very slow, as data must be collected manually using tape measures and string to verify alignment relative to other piles. All the information collected in the field is written down by hand, in a notebook or sheet of paper, and later transferred to an Excel file.

Due to the slowness of this piling review system, only approximately 30% of the total number of piles installed are validated, causing delays and inaccuracies, since failure to record all the piles leads to future installation problems.

It is therefore necessary to optimize the verification of the installation of the piles, carrying it out in a fast and reliable manner. This step is extremely important, as improperly placed piles can lead to erroneous solar tracker installations and project delays.

### Description of the invention

The present invention relates to a device and a system for quality control of pile driving in photovoltaic plants. The invention allows checking the correct geometric arrangement of installed piles in photovoltaic fields.

The invention allows real-time knowledge of each pile's geometric conditions, including its position (e.g., latitude, longitude, and altitude) of the center of the pile, the height of the pile with respect to the ground and the inclination of the pile (elevation θ, bank angle φ, orientation ψ with respect to geographic north, as commonly referred to in standard English nomenclature as *"pitch," "roll," and "yaw"*)*.*

In order to obtain these parameters for a given pile, a driving control device is placed on the top of the pile. The device comprises a pile fastening system, a geolocation system to measure the pile's position, a distance sensor to measure its height above the ground, an inclination sensor to measure its tilt, orientation measurement tools to determine its direction relative to north, a wireless communication module, a battery, and a control unit configured to wirelessly send and receive sensor measurements to a remote server.

The parameters of each pile received are compared on the remote server with a theoretical model obtained during the planning phase of the photovoltaic plant. The system determines whether the pile is properly installed and informs, via an interface, the pile's location and any discrepancies compared to the theoretical model.

### Brief description of the drawings

Below is a brief description of a series of drawings that help better understand the invention and that are expressly related to an embodiment of said invention that is presented as a non-limiting example:
Figure 1 shows a pile used in photovoltaic plants.
Figure 2 shows a set of piles installed in a photovoltaic plant.
Figure 3 shows a pile driving control device mounted on a pile.
Figure 4A illustrates the pile driving control device with the fastening system coupled to its base. Figure 4B illustrates the coupling of the fastening piece from Figure 4A to different pile profiles.
Figure 5 shows, according to one embodiment, the internal components of the pile driving control device.
Figure 6 represents a possible implementation of the pile driving control system in photovoltaic plants.
Figure 7 illustrates a map of a photovoltaic plant showing the status of correct or incorrect placement of the piles, based on the verification performed by the pile driving control system.

### Detailed description of the invention

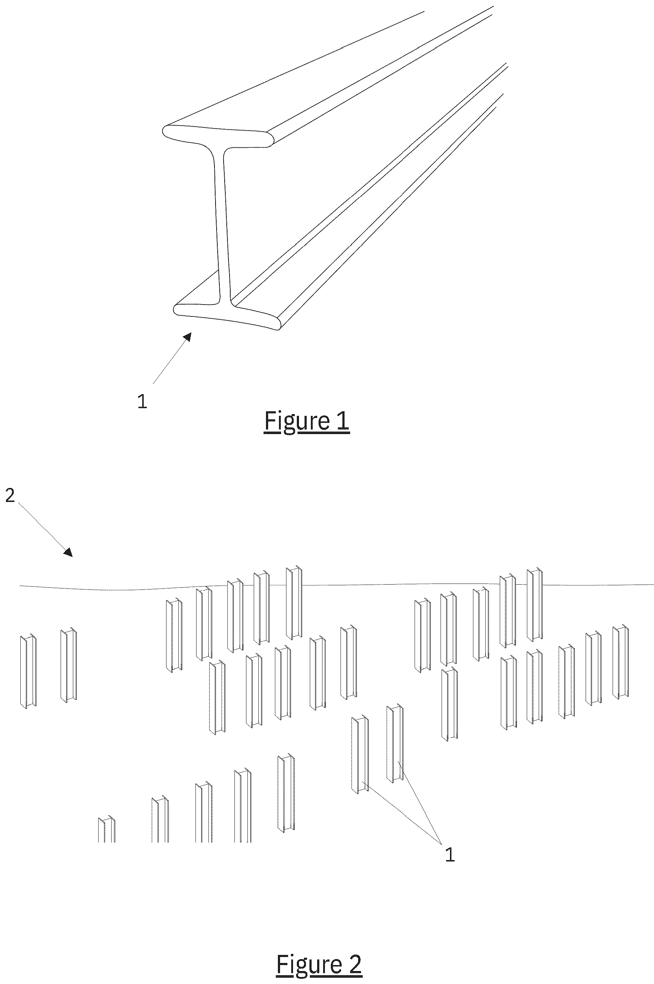

**Figure 1** shows one of the most common pile driver profiles 1 used in the construction of photovoltaic parks. **Figure 2** shows a set of pile drivers 1 installed during the construction process of a photovoltaic plant 2.

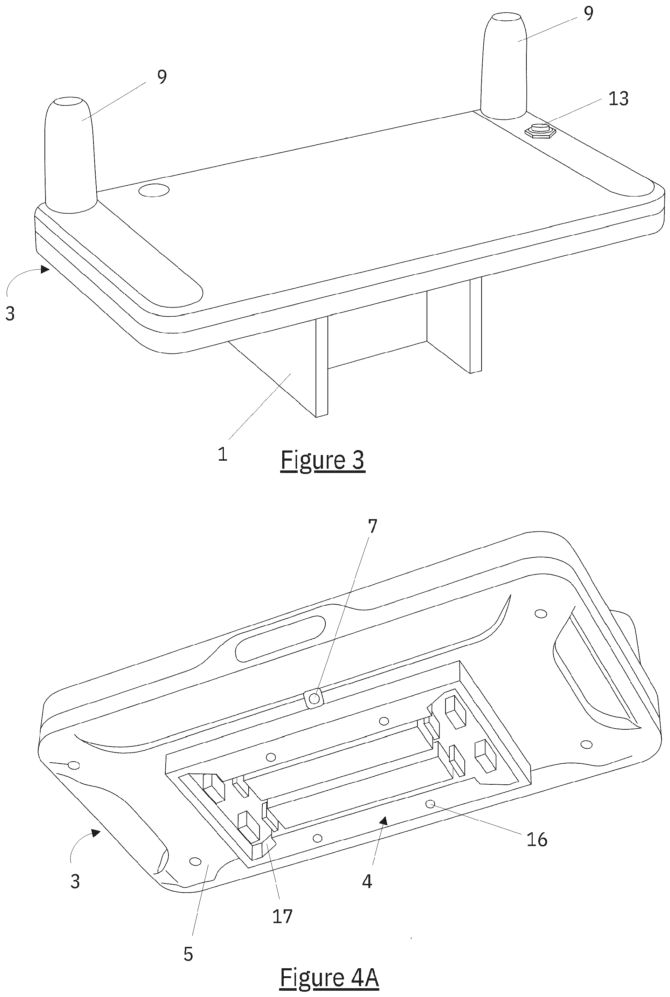

The present invention relates to a device for controlling pile driving in photovoltaic plants. This device enables pile driving quality checks using a hardware system. **Figure 3** shows, according to one embodiment, a pile driving control device 3 mounted on a pile 1 (only the upper end of the pile driver is shown 1).

A support or fastening system allows the pile driving control device 3 to be placed in a fixed and stable position on the pile 1, perpendicular to its longitudinal axis. The fastening system may include any component for support, fixation, anchoring, or gripping to allow the base of the driving control device 3 to be placed on the pile 1 in a fixed and stable position. Preferably, the fastening system includes an interchangeable support piece coupled to the base or lower part of the pile driving control device 3. The shape and size of the interchangeable piece depend on the pile profiles 1 used in the photovoltaic park.

In the embodiment shown in **Figure 4A** , the interchangeable fastening piece 4 is a plate, preferably made of high-strength plastic, fixed to the base 5 of the pile driving control device 3, in a centered position, by means of fixing means or elements (e.g. by means of screws 16 that can be unscrewed by hand, by means of screwless coupling to guides made in the base 5, etc.). The fastening piece 4 has cavities or holes 17 complementary to the pile profile 1, enabling a mortise and tenon fit between the pile's top 1 and the fastening piece 4, thus achieving a stable support of the pile driving control device 3 as well as a rapid placement of the device in the pile 1 as there are no gripping or tightening elements, such as screws.

Using the fastening piece 4, the pile driving control device 3 is snapped onto the pile profile 1, because the clamping piece 4 with its cavities 17 (some of them slot-shaped) acts as a mould of the negative of the pile driving 1 which helps to centre the device in a centred position with respect to the pile driving. This mold is designed to accommodate multiple pile profiles, not just one. For example, the mold shown in Figure 4A has cavities 17 complementary to the profiles C200, C180, C160, IPEA 200 and IPEA 240. This mold-based fastening piece 4 should preferably be interchangeable because the pile driving profiles vary depending on the photovoltaic park, so that other molds will adapt to other pile driving configurations. Therefore, molds are used to allow working with several types of pile drivers at the same time, because in a photovoltaic park there can be many different types of pile drivers (for example, in a park there can be twelve or more different types of pile driver profiles).

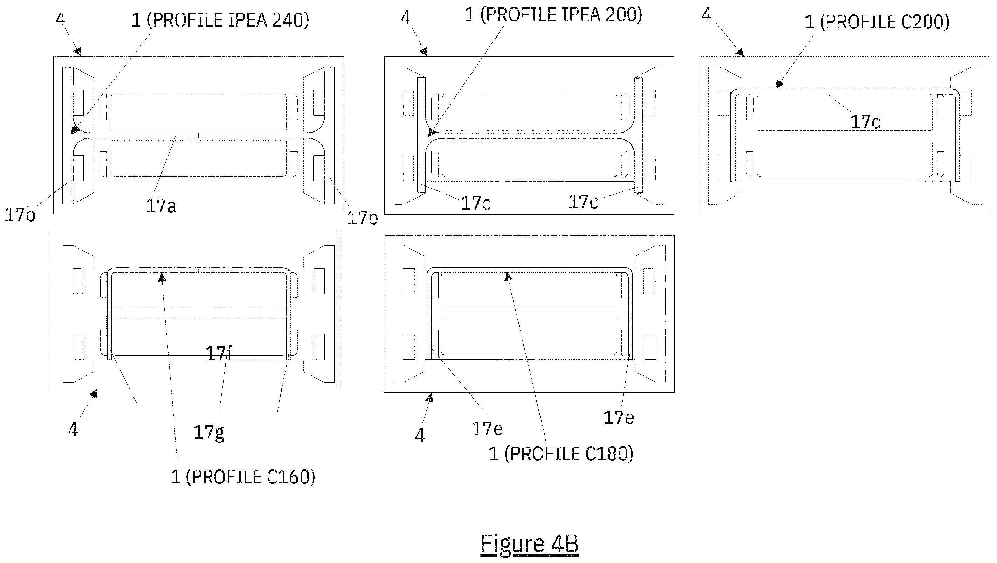

A bottom view of **Figure 4B****,** shows how different pile profiles 1 (C200, C180, C160, IPEA 200, IPEA 240) fit into the fastening piece 4 where cavities 17 are complementary. Thus, in this example:
- The IPEA 240 profile is coupled to a middle horizontal slot 17a and to two first vertical slots 17b located at the opposite longitudinal ends of the fastening piece 4.
- The IPEA 200 profile is coupled to the middle horizontal slot 17a and to two second vertical slots 17c, located in a more interior position than the first two vertical slots 17b.
- Profile C200 is coupled to an upper horizontal slot 17d and to the two second vertical slots 17c. - Profile C180 is coupled to the upper horizontal slot 17d and to two third vertical slots 17e, located in a more interior position than the two second vertical slots 17c.
- The C200 profile is coupled to the upper horizontal slot 17d and to two fourth vertical slots 17f, located in a more interior position than the two third vertical slots 17e.

In one embodiment, the cavities 17 include multiple slots. For example, the mold depicted in Figures 4A and 4B includes three horizontal slots (middle horizontal slot 17a, upper horizontal slot 17d, lower horizontal slot 17g), two first vertical slots 17b, two second vertical slots 17c, two third vertical slots 17e, and two fourth vertical slots 17f.

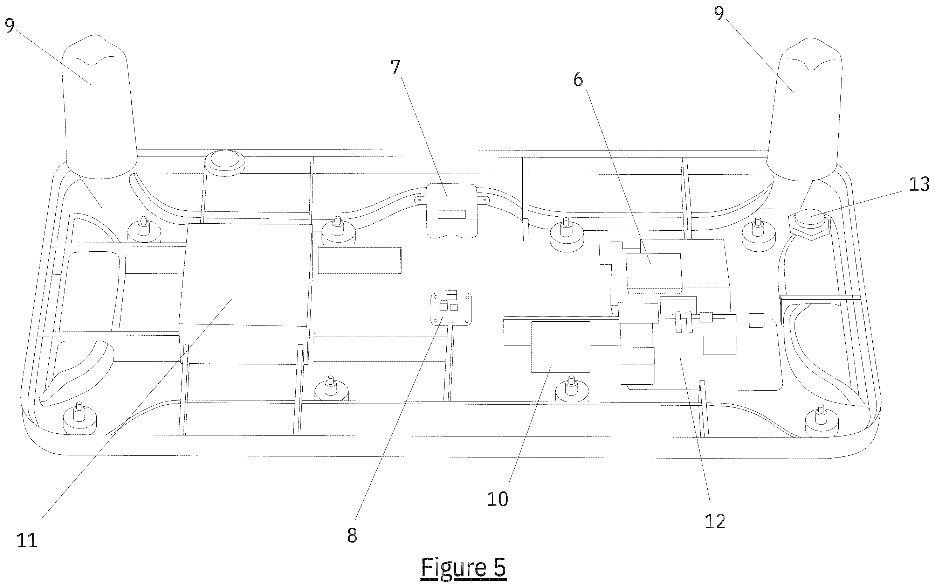

**Figure 5** illustrates the internal components of the pile driving control device 3, according to one embodiment. The pile driving control device 3 includes:
- A GNSS geolocation system 6 configured to measure the position of the device and, with it, the position of pile 1.
- A distance sensor 7 configured to measure the height of the device relative to the ground and, with it, the height of the pile 1.
- A tilt sensor 8 configured to measure the tilt, inclination or fall of the base of the device with respect to a horizontal plane and, thus, the vertical inclination of the pile 1.
- An orientation measuring unit 9 configured to measure the orientation of the pile driver 1 relative to North.
- A wireless communications module 10.
- A battery 11, preferably rechargeable, to power the device's electronic components.
- A control unit 12 configured to wirelessly transmit sensor data to a remote server using the communication module 10.

In one embodiment, the geolocation system 6 is a RTK GPS module (a GPS data acquisition and RTK data transmission board) dual-antenna (this is a differential system with two receiving antennas and with RTK corrections that ensure a minimum positioning error) that, in addition to provide position information, estimates the orientation or yaw ψ of the device and, therefore, estimates the orientation of the pile 1 since the device is always positioned with the same orientation with respect to the pile 1. In this way, the dual GPS antennas are used as an orientation measurement unit 9, in addition to the geolocation system 6. Furthermore, and unlike a compass, this orientation system is immune to magnetic interference caused by the iron of the piles 1. The geolocation system 6 is preferably positioned on the pile driving control device 3 so that its position aligns with the pile's center 1. In this embodiment, orientation relative to North is obtained through the dual GPS antennas. Alternatively, the orientation measuring unit 9 could be an orientation sensor.

The distance sensor 7 is arranged opposite the base 5 of the pile driving control device 3. In one embodiment, a distance sensor (e.g. a laser distance meter or an ultrasonic sensor) is used which measures, through an opening in the base 5 (which may be covered with glass), the distance from the base 5 to the ground (and therefore the height of the part of the driving pile 1 protruding from the ground). For example, ultrasonic distance sensors with a 3 m range and a 2 cm error margin could be used.

In one embodiment, the tilt sensor 8 is an inertial sensor or inertial measurement unit that measures the elevation θ (¨pitch¨) and the bank angle φ (¨roll¨).

In one embodiment, the wireless communications module 10 is a cellular communication module (e.g., GSM module, GPRS module, UMTS module, LTE module, 4G module, 5G module).

The control unit 12 is preferably based on a processor or microcontroller. For example, the control unit 12 can be implemented on a Raspberry Pi board that collects and sends sensor data. In one embodiment, the pile driving control device 3 includes a button 13 detected by the control unit 12. Once the button 13 is pressed, the control unit 12 wirelessly sends the sensor data captured at that time. Alternatively, other input methods, such as a touchscreen or a touch-sensitive sensor, could be used to initiate data transmission.

After sensor data is sent to the remote server, offsets are calculated based on the pile model. Hence, it is crucial that the device is consistently positioned respect the pile 1, regardless of its size.

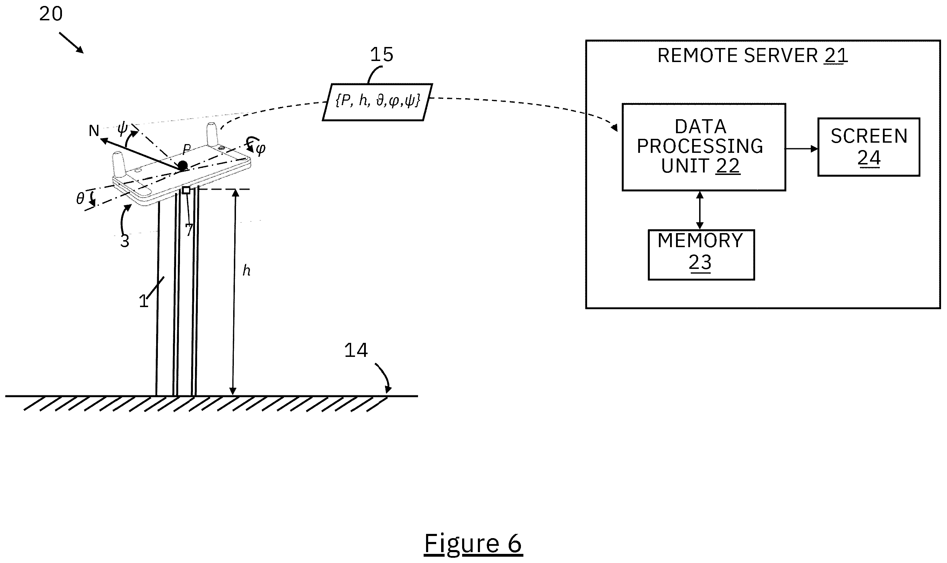

This invention also relates to a pile driving control system 20 in photovoltaic plants, such as depicted in Figure 6. The pile driving control system 20 includes a pile driving control device 3, described above, and a remote server 21, with a data processing unit 22 configured to log sensor measurements sent by the pile driving control device 3 once an operator presses the button 13. Figure 6 shows the capture of the measurements 15 by the sensors of the pile driving control device 3 and their wireless transmission, for example using a GSM module, to the remote server 21. In particular, the remote server 21 receives (via a corresponding wireless communications module, not shown in the figure) the position P (preferably defined by latitude and longitude), the orientation *ψ* , the vertical inclination (elevation θ for the N/S tilt and bank angle φ for the E/W tilt) and the height h of the pile 1. These measurements 15 are stored in a memory 23.

The operator, who is in charge of placing the pile driving control device 3 on the pile 1 and press the button 13 to start sending the measurements 15 to the remote server 21, would then dismantle the device to install it on another pile 1, preferably adjacent, making a new measurement. Due to the simplicity of the fastening system, measurements can be quickly performed for different piles 1 of the photovoltaic plant 2. All measurements 15 for different piles 1 are stored in the remote server 21 database.

Once the measurements 15 corresponding to all the piles 1 of the photovoltaic plant 2, or at least a part of them, are recorded, the data processing unit 22 of the remote server 21 reads all stored information in memory 23 and, based on the coding of the piles 1, automatically creates the record of piles 1 and trackers of the photovoltaic plant 2. Alternatively, each pile is registered in real time as its corresponding measurement is received. After data registration, the remote server 21 can display the piles 1 on a screen 24 using a geolocated and interactive map. Users can easily access information about each pile 1.

In one embodiment, data received from the field are entered into the database in real time, and relevant checks are automatically executed to verify proper pile installation. The data processing unit 22 identifies whether a pile 1 is correctly positioned, its orientation is accurate, and the exposure meets design parameters for the photovoltaic plant 2. Therefore, the data processing unit 22 is preferably configured to, once the measurements have been received 15 from the pile driving control device 3, check the correct driving of the pile driver 1 based on the information received on the position P (latitude, longitude, altitude) , orientation *ψ* with respect to the north, slope (N/S slope marked by the elevation θ and E/W slope marked by the bank angle φ) and height h of the pile 1 with respect to the ground. Measurements 15 taken by the pile driving control device 3 are compared with the theoretical values for each pile in the photovoltaic plant. If the differences are above a tolerance, it is considered to have been poorly executed.

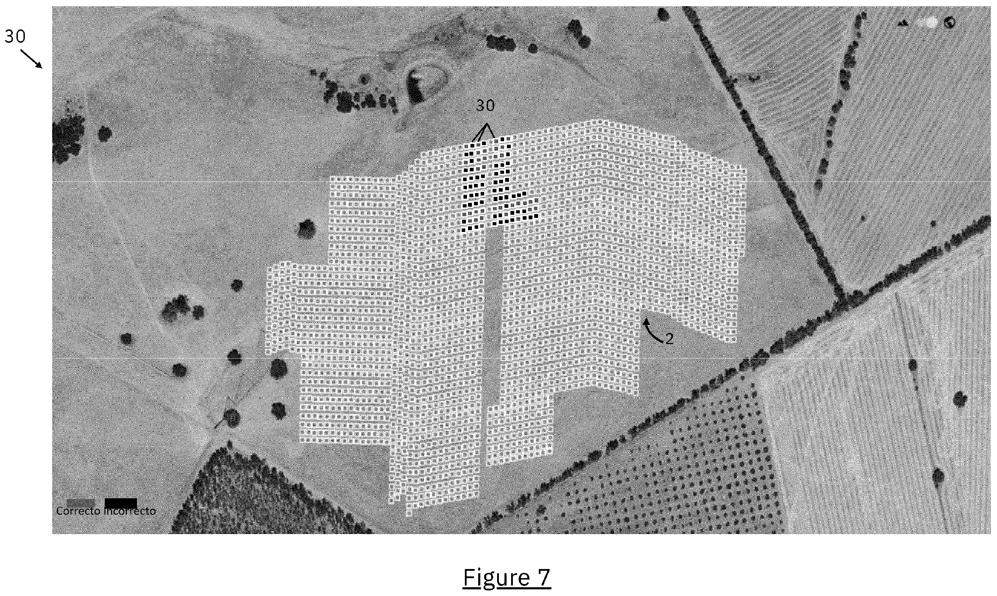

Figure 7 represents a map 30, preferably an interactive map of a photovoltaic plant 2, showing with a symbol (e.g. with a square) the location of each pile 1 determined in the planning phase. As pile driver measurements 15 are received from the pile driving control device 3, each measurement 15 is associated with a certain pile driver (square) on the map 30 based on the received position information P , and the pile driver square is filled with a certain colour based on the placement status of each pile 1 (e.g. green colour for correct pile driving, red colour for incorrect pile driving), i.e. based on the verification of correct pile driving made by the data processing unit 22.

Using the pile information, checks can also be performed at the tracker-level. A tracker consists of a group of aligned piles 1. After all piles 1 in a tracker are measured, the following values can be checked, in particular:
- Distance between neighboring trackers (E/O distance).
- Overall height alignment of piles (that they are aligned in height).
- Distance between piles of the same tracker.

## Claims

1. A pile driving control device in photovoltaic plants, comprising:
a fastening system to a pile (1) of a photovoltaic plant (2);
a geolocation system (6) configured to measure the position (P) of the pile (1);
a distance sensor (7) configured to measure the height (h) of the pile (1) relative to the ground (14);
a tilt sensor (8) configured to measure the pile (1) vertical inclination;
an orientation measurement unit (9) configured to measure the orientation (*ψ*) of the pile (1);
a wireless communications module (10);
a battery (11); and
a control unit (12) configured for wireless reception and transmission of the measurements (15) from the sensors to a remote server (21).

2. The pile driving control device according to claim 1, **characterized in that** the clamping system comprises an interchangeable clamping piece (4) attached to the base (5) of the pile driving control device (3).

3. The pile driving control device according to claim 2, **characterized in that** the holding piece (4) comprise a set of cavities (17) complementary to one or more pile driving profiles (1).

4. The pile driving control device according to claim 3, **characterized in that** the cavities (17) comprise a plurality of slots (17a, 17b, 17c, 17d, 17e, 17f, 17g).

5. The pile driving control device according to any of the preceding claims, **characterized in that** the geolocation system (6) and the orientation measurement unit (9) are implemented in a dual-antenna RTK GPS module.

6. The pile driving control device according to any of the preceding claims, **characterized in that** the distance sensor (7) is a laser distance meter configured to measure the height (h) of the pile driving (1) relative to the ground (14) through an opening in the base (5).

7. The pile driving control device according to any of the preceding claims, **characterized in that** the tilt sensor (8) is an inertial measurement unit that measures the elevation (*θ*) and the bank angle (φ).

8. The pile driving control device according to any of the preceding claims, **characterized in that** the wireless communication module (10) is a cellular communication module.

9. The pile driving control device according to any of the preceding claims, **characterized in that** it includes a button (13), with the control unit (12) configured to detect the pressing of the button (13) and wirelessly send the sensor measurements (15) captured at that moment.

10. A pile driving control system in photovoltaic plants, **characterized by** comprising:
a pile driving control device (3) according to any of the preceding claims; and
a remote server (21), comprising a data processing unit (22) configured to record in memory (23) the sensor measurements (15) sent by the pile driving control device (3).

11. The pile driving control system according to claim 10, **characterized in that** the data processing unit (22) is configured to check the correct pile driving of the pile driver (1) based on the information received on the position (P), orientation (*ψ*), vertical inclination ( *θ* , φ) and height (h) of the pile (1).

12. The pile driving control system according to claim 11, **characterized in that** the data processing unit (22) is configured to display on a screen (24) a map (30) showing the result of checking the correct pile driving of a plurality of piles (1) of the photovoltaic plant (2).

## Amended claims

### Amended claims in accordance with Rule 137(2) EPC.

1. A pile driving control device for the construction phase of photovoltaic plants, the pile driving control device (3) comprising:
a fastening system to a pile (1) of a photovoltaic plant (2);
a geolocation system (6) configured to measure the position (*P*) of the pile (1);
a distance sensor (7) configured to measure the height (*h*) of the pile (1) relative to the ground (14);
a tilt sensor (8) configured to measure the pile (1) vertical inclination;
an orientation measurement unit (9) configured to measure the orientation (*ψ*) of the pile (1);
a wireless communications module (10);
a battery (11); and
a control unit (12) configured for wireless reception and transmission of the measurements (15) from the sensors to a remote server (21).

2. The pile driving control device according to claim 1, **characterized in that** the fastening system comprises an interchangeable fastening piece (4) attached to the base (5) of the pile driving control device (3).

3. The pile driving control device according to claim 2, **characterized in that** the fastening piece (4) comprises a set of cavities (17) complementary to one or more pile profiles.

4. The pile driving control device according to claim 3, **characterized in that** the cavities (17) comprise a plurality of slots (17a, 17b, 17c, 17d, 17e, 17f, 17g).

5. The pile driving control device according to any of the preceding claims, **characterized in that** the geolocation system (6) and the orientation measurement unit (9) are implemented in a dual-antenna RTK GPS module.

6. The pile driving control device according to any of the preceding claims, **characterized in that** the distance sensor (7) is a laser distance meter configured to measure the height (*h*) of the pile (1) relative to the ground (14) through an opening in the base (5).

7. The pile driving control device according to any of the preceding claims, **characterized in that** the tilt sensor (8) is an inertial measurement unit that measures the elevation (*θ*) and the bank angle (φ).

8. The pile driving control device according to any of the preceding claims, **characterized in that** the wireless communication module (10) is a cellular communication module.

9. The pile driving control device according to any of the preceding claims, **characterized in that** it includes a button (13), with the control unit (12) configured to detect the pressing of the button (13) and wirelessly send the sensor measurements (15) captured at that moment.

10. A pile driving control system in photovoltaic plants, **characterized by** comprising:
a pile driving control device (3) according to any of the preceding claims; and
a remote server (21), comprising a data processing unit (22) configured to record in memory (23) the sensor measurements (15) sent by the pile driving control device (3).

11. The pile driving control system according to claim 10, **characterized in that** the data processing unit (22) is configured to check the correct pile driving of the pile (1) based on the information received on the position (*P*), orientation (*ψ*), vertical inclination (*θ ,* φ) and height (*h*) of the pile (1).

12. The pile driving control system according to claim 11, **characterized in that** the data processing unit (22) is configured to display on a screen (24) a map (30) showing the result of checking the correct pile driving of a plurality of piles (1) of the photovoltaic plant (2).
